# EUROPEAN PATENT SPECIFICATION

(11) **EP 1 974 932 B1**
(45) Date of publication and mention of the grant of the patent: **10.07.2013**
(21) Application number: 08290300.6
(22) Date of filing: 28.03.2008
(51) Int. Cl.: B41J 3/54, B41J 19/00, B41J 11/00

(54) **Printer-plotter**
Drucker-Plotter
Imprimante-traceur

(30) Priority: 30.03.2007 JP 2007090535
(43) Date of publication of application: 01.10.2008
(73) Proprietor: Mimaki Engineering Co., Ltd., Tomi-shi, Nagano 389-0512 (JP)
(72) Inventor: Takada Masanori c/o Mimaki Engineering Go., Ltd., Nagano (JP); Ipponyari Tadanori c/o Mimaki Engineering CO., LTD., NNagano (JP); Miyashita Eiji c/o Mimaki Engineering CO., ltd, Nogano (JP); Ikeda Tetsuharu c/o Mimaki Engineering Co., LTD., Nagano (JP); Kobayahi Akio c/o Mimaki Engineering Co., Ltd., Nagano (JP)
(74) Representative: Uchida, Kenji

(56) References cited:
- JP-A- 1 151 896
- US-A- 3 945 022
- US-A- 4 874 264
- US-A- 5 949 443
- US-A1- 2005 270 352

## Description

The present invention relates to a printer-plotter comprising a feeding mechanism for feeding a sheet-like medium, held on a platen, in the anteroposterior direction, and a printer head and a cutting head each of which travels in the lateral direction along a guide rail extending in the lateral direction above the platen.

Printer is an apparatus for printing on a surface of a sheet-like medium by, for example, ejecting ink droplets from a printer head (inkjet head) while moving the printer head in anteroposterior and lateral directions (horizontally) relative to the sheet-like medium. Plotter is an apparatus for conducting the cutting process relative to a sheet-like medium by moving a cutting head in anteroposterior and lateral directions relative to the sheet-like medium while holding a cutter of the cutting head in contact with the sheet-like medium. For moving each of the heads of these apparatuses in the anteroposterior and lateral directions relative to the sheet-like medium, there is known an arrangement in which the head is supported by a guide rail extending in the lateral direction above the medium such that the head is movable in the lateral direction along the guide rail and the sheet-like medium is fed in the anteroposterior direction. There is also known an arrangement in which the sheet-like medium is fixed and supported on a flat plate and a guide rail which supports the head movably in the lateral direction moves in the anteroposterior direction above the sheet-like medium which is fixed as mentioned above.

There is also known an apparatus comprising a printer head and a cutting head which are supported on a guide rail so that the apparatus has functions as a printer in addition to a plotter (a plotter with print function) (for example, see Patent document 1: Japanese Patent No. 3333312, and Patent document 2: Japanese Patent No. 3645012). By using such a plotter with print function, the space and the cost can be reduced as compared to a case using separately a printer and a plotter.

In the plotter with print function as disclosed in the aforementioned patent documents, the cutting head is attached to a belt which is driven by driving force of an electric motor similarly to a conventional plotter so that the cutting head is moved in the lateral direction according to the movement of the belt. In addition, a printer head is detachably attached to the cutting head which is moved in the lateral direction according to the movement of the belt. When the printer head is detached from the cutting head, the printer head is connected to a fixing member at an end of the guide rail so that the printer head is held not to move. During cutting process relative to a sheet-like medium by this plotter with print function having the aforementioned structure, the printer head is separated from the cutting head and is fixed to the fixing member so that only the cutting head is moved in the lateral direction. During printing process relative to a sheet-like medium, the printer head is detached from the fixing member and is connected to the cutting head so that the printer head is moved together with the cutting head in the lateral direction.

According to the plotter with print function having the aforementioned structure, both two heads are connected and are thus moved together during the printing process. For the movement, large belt driving force is required and an electric motor for driving the belt is thus required to have a large capacity, thus leading to increase in size and cost of the apparatus. Further, since the printer head is connected directly to the cutting head during the printing, ink droplets ejected from the printer head for printing may adhere to the cutting head so that the cutting head may be contaminated. Particularly when a solvent ink is used for printing, coatings of electric wires and harnesses for transmitting power and control signals to electric parts in the cutting head may be dissolved due to the adhesion of the solvent ink, leading to operation error of the cutting head. It should be noted that if the coatings of the electric wires and harnesses are made of a material having ink resistance, there is a problem of high cost of production of the apparatus because such a material is expensive.

Also, patent documents US4874264A, US5949443A and JP11151896 each disclose a printer-plotter comprising two heads each of which has a connecting mechanism for detachably connecting heads to a driving force transmitting member. In these printer-plotter, to conduct the predetermined action relative to a medium by one of the two heads, the head is connected to the driving force transmitting member by the corresponding connecting mechanism, and the other head is separated from the driving force transmitting member by the corresponding connecting mechanism, wherein the driving force transmitting member is moved in the lateral direction by the driving mechanism to move the head in the lateral direction.

The present invention is made to address the aforementioned problems and it is an object of the present invention to provide a printer-plotter comprising a guide rail extending in the lateral direction and two heads supported by the guide rail, in which reduced driving force is required to move the heads so as to reduce the size and cost of the apparatus and ink droplets ejected from the printer head hardly adhere to the cutting head and its electric wiring.

To this end, there is provided a printer-plotter comprising: a feeding mechanism for feeding a sheet-like medium, put on a platen thereof, in the anteroposterior direction; a guide rail which is disposed above the platen to extend in the lateral direction; a first head and a second head which are supported by the guide rail and are movable independently from each other in the lateral direction along the guide rail, wherein the first head and second head conduct respective predetermined actions relative to the medium fed in the anteroposterior direction on the platen while moving in the lateral direction; a driving device having a belt-like driving force transmitting member which extends in parallel with the guide rail in the lateral direction and a driving mechanism for moving the driving force transmitting member in the lateral direction; a first connecting mechanism disposed on the first head for detachably connecting the first head to the driving force transmitting member; and a second connecting mechanism disposed on the second head for detachably connecting the second head to the driving force transmitting member; wherein to conduct the predetermined action relative to the sheet-like medium by the first head, the first head is connected to the driving force transmitting member by the first connecting mechanism, the second head is separated from the driving force transmitting member by the second connecting mechanism, the driving force transmitting member is moved in the lateral direction by the driving mechanism to move the first head in the lateral direction; and wherein to conduct the predetermined action relative to the sheet-like medium by the second head, the second head is connected to the driving force transmitting member by the second connecting mechanism, the first head is separated from the driving force transmitting member by the first connecting mechanism, the driving force transmitting member is moved in the lateral direction by the driving mechanism to move the second head in the lateral direction. The printer-plotter is characterized in that the first connecting mechanism is adapted to clamp the driving force transmitting member for detachably connecting the first head to the driving force transmitting member and the second connecting mechanism is adapted to clamp the driving force transmitting member for detachably connecting the second head to the driving force transmitting member, wherein each of the first connecting mechanism and the second connecting mechanism is adapted to select its state between a state where the connecting mechanism clamps the driving force transmitting member to connect to the driving force transmitting member and a state where the connecting mechanism releases the driving force transmitting member to separate from the driving force transmitting member.

It is preferable that the printer-plotter having the aforementioned structure comprises a first head fixing mechanism for fixing and holding said first head at one of the ends of said guide rail and a second head fixing mechanism for fixing and holding said second head at the other end of said guide rail; wherein when said first head connected to said driving force transmitting member is moved in the lateral direction by moving said driving force transmitting member in the lateral direction by said driving mechanism, said second head separated from said driving force transmitting member is fixed and held by said second head fixing mechanism, and wherein when said second head connected to said driving force transmitting member is moved in the lateral direction by moving said driving force transmitting member in the lateral direction by said driving mechanism, said first head separated from said driving force transmitting member is fixed and held by said first head fixing mechanism.

In the driving device, it is preferable that said driving mechanism comprises a pair of pulleys which are disposed near the right and left ends of said guide rail, respectively, and a driving motor for driving either one of said pulleys to rotate, and said driving force transmitting member is a driving belt which is wound around said pulleys to extend along and in parallel with said guide rail, wherein said driving belt is moved in the lateral direction by the rotation of said pulley driven by said driving motor. This arrangement enables a compact design of the driving device.

It is preferable that said first head is a cutting head for conducting cutting process relative to the medium and said second head is a printer head for conducting printing relative to the medium. This arrangement enables a printer-plotter of a compact design having both functions as a cutting plotter and a printer. In the printer-plotter of this arrangement, since the cutting head stands by in a state supported at the end of the guide rail during the printing, there is little chance that ink droplets ejected from the printer head during the printing adhere to the cutting head and its electric wires, thereby preventing the cutting head from being contaminated and preventing occurrence of operation error due to dissolution of covers of the electric wires.

It is also preferable that the first head and the second head are printer heads for conducting printing relative to the medium, respectively. In this case, inks of different compositions such as aqueous ink and solvent ink can be handled by the first head and the second head, whereby printing of two types can be conducted singly by one printer.

It is also preferable that the cutting head is provided with a spray unit for forming a coating layer on the surface of the sheet-like medium. Therefore, coating agent is sprayed from the spray unit onto the surface of the sheet-like medium while moving the cutting head, thereby forming a coating layer on the surface of the sheet-like medium. For example, it is possible to easily laminate the surface of the sheet-like medium.

According to the printer-plotter of the present invention having the aforementioned structure, for example, as the driving force transmitting member is moved in the lateral direction by the driving mechanism when the first head is connected to the driving force transmitting member by the first connecting mechanism and the second head is separated from the driving force transmitting member by the second connecting mechanism, the first head is allowed to conduct the predetermined action (cutting process or printing) relative to the sheet-like medium while moving the first head in the lateral direction. During this, the second head is on standby in a state supported by the guide rail. On the other hand, the first head can be separated to be on standby and the second head can be connected to the driving force transmitting member to conduct the predetermined action while moving in the lateral direction. As mentioned above, since the printer-plotter is structured such that the first and second heads are moved separately to conduct the respective actions relative to the sheet-like medium, the driving force required for the driving mechanism can be small and the driving device can be configured to be small and light, thereby achieving reduction in size, weight, and cost of the entire apparatus.

When said first head connected to said driving force transmitting member is moved in the lateral direction by moving said driving force transmitting member in the lateral direction by said driving mechanism, said second head separated from said driving force transmitting member is fixed and held by said second head fixing mechanism. When said second head connected to said driving force transmitting member is moved in the lateral direction by moving said driving force transmitting member in the lateral direction by said driving mechanism, said first head separated from said driving force transmitting member is fixed and held by said first head fixing mechanism. This arrangement is preferable because the second head is fixed and held at the end of the guide rail and thus never disturbs the action of the first head when the first head is moved in the lateral direction along the guide rail to conduct the predetermined action, and on the other hand, the first head is fixed and held at the end of the guide rail and thus never disturbs the action of the second head when the second head is moved along the guide rail in the lateral direction to conduct the predetermined action.

The above, and the other objects, features and advantages will be made apparent from the following description of the preferred embodiments, given as non-limiting examples, with reference to the accompanying drawings, in which:
Fig. 1 is a perspective view schematically showing the structure of the operational principle of heads of a printer-plotter according to the present invention;
Fig. 2 is a perspective view showing the appearance of the printer-plotter according to the present invention;
Fig. 3 is a front view showing the heads of the printer-plotter device and driving devices thereof;
Figs. 4(a), 4(b) are perspective views showing a connecting mechanism for connecting the cutting head or the printer head and a driving belt in the printer-plotter;
Figs. 5(a), 5(b) are perspective views showing another connecting mechanism for connecting the cutting head or the printer head and the driving belt in the printer-plotter;
Fig. 6 is a perspective view showing a variation example of the printer-plotter; wherein
P: printer-plotter 10: body 20: feeding mechanism 30: platen 40: guide rail 50: cutting head 60: printer head.

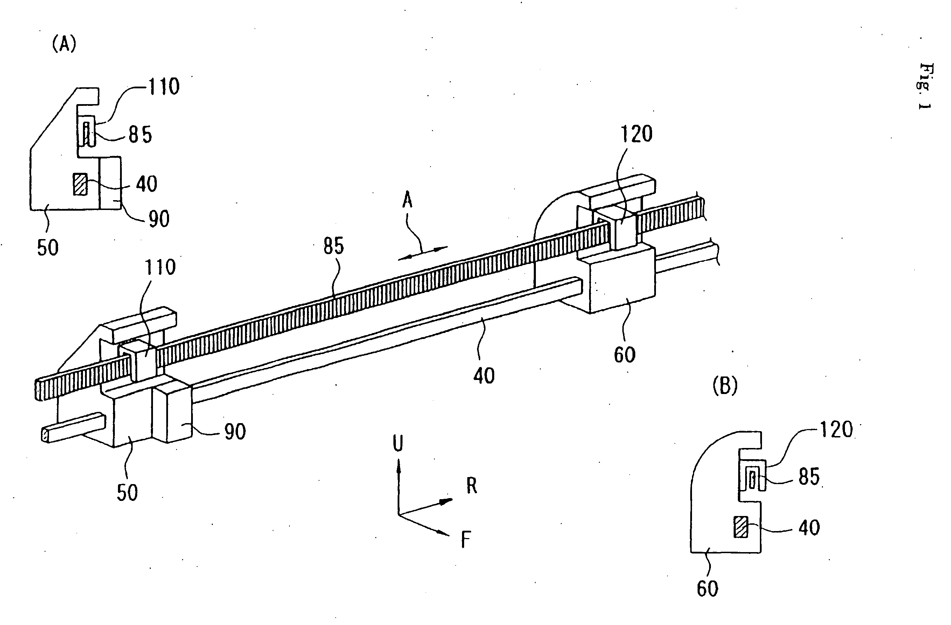

It should be noted that the directions of arrows F, R, U marked in the drawings are forward, rightward, upward in the following description, respectively. Since a printer-plotter according to the present invention is characterized by a structure of moving a printer head and a cutting head in the lateral direction, the principled structure of the present invention will be first described with reference to Fig. 1 which schematically shows the structure of the operational principle.

Shown in Fig. 1 are a guide rail 40, a cutting head 50 and a printer head 60 (sometimes called "inkjet head") which are attached to the guide rail 40 movably in the lateral direction, and a driving belt 85 which are components of a printer-plotter. As will be described below, the printer-plotter comprises a platen on which a sheet-like medium as a subject to be cut by the cutting head 50 or a subject to be printed by the printer head 60 is put, and a feeding mechanism for feeding the sheet-like medium put on the platen in the anteroposterior direction. The guide rail 40 extends in the lateral direction above the platen. The cutting head 50 and the printer head 60 are attached to the guide rail 40 such that they are movable in the lateral direction independently. The driving belt 85 extends above and in parallel with the guide rail 40. As will be described later, the driving belt 85 is an endless ring-like belt and is wound around driving and driven pulleys, which are disposed right and left ends, to extend therebetween. As the driving pulley is rotated by an electric motor or the like, the driving belt 85 is moved in the lateral direction as shown by arrows A in Fig. 1.

Attached to the front surface of the cutting unit 50 is a spray unit 90 for applying a coating agent to form a coating layer on a surface of the sheet-like medium before the cutting process by the cutting unit 50.

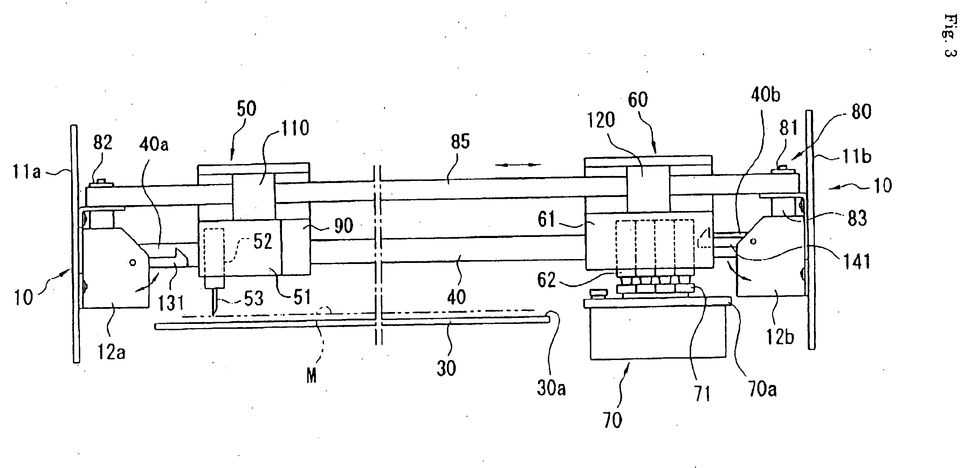

The cutting head 50 is provided with a cutting head connecting mechanism 110 which can clamp the driving belt 85 to connect to the driving belt 85, while the printer head 60 is provided with a printer head connecting mechanism 120 which can clamp the driving belt 85 to connect to the driving belt 85. For making it easily understandable, the structure is schematically shown in Fig. 1. Specific structure will be described later with reference to Fig. 3 through Fig. 5. Each of the cutting head connecting mechanism 110 and the printer head connecting mechanism 120 is adapted to select its state between a state where the connecting mechanism clamps the driving belt 85 to connect to the driving belt 85 as shown in Fig. 1(A) and a state where the connecting mechanism releases the driving belt 85 to separate from the driving belt 85 as shown in Fig. 1(B).

Therefore, during the cutting process (cutout process or the like) relative to the sheet-like medium by the cutting head 50 or during the process for coating the surface of the sheet-like medium by the spray unit 90 attached to the front surface of the cutting head 50, the cutting head 50 is connected to the driving belt 85 by the cutting head connecting mechanism 110 clamping the driving belt 85 and the cutting head 50 is controlled to travel along the guide rail 40 in the lateral direction by controlling the rotation of the driving pulley. During this, the feeding of the sheet-like medium in the anteroposterior direction by the feeding mechanism is also controlled in combination with the control of the rotation of the driving pulley. In this state, a cutter (not shown) attached to the lower surface of the cutting head 50 is used to conduct intended cutting process relative to the sheet-like medium.

On the other hand, during the printing relative to the sheet-like medium by the printer head 60, the printer head 60 is connected to the driving belt 85 by the printer head connecting mechanism 120 clamping the driving belt 85 and the printer head 60 is controlled to travel along the guide rail 40 in the lateral direction by controlling the rotation of the driving pulley. During this, the feeding of the sheet-like medium in the anteroposterior direction by the feeding mechanism is also controlled in combination with the control of the rotation of the driving pulley. In this state, ink droplets are ejected from an inkjet device attached to the lower surface of the printer head 60 to conduct intended printing on the sheet-like medium.

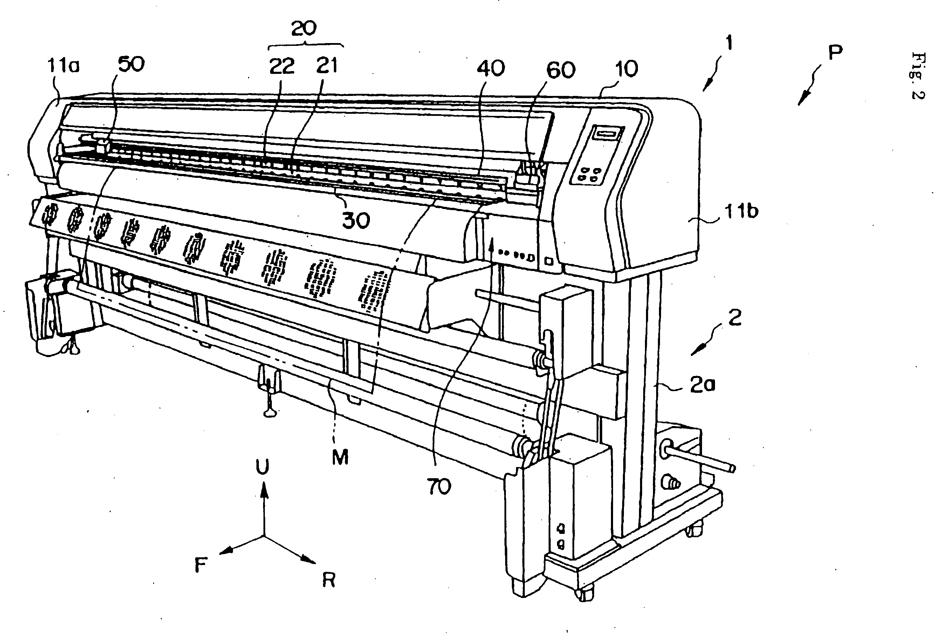

Hereinafter, the specific structure of the printer-plotter having the aforementioned structure of operational principle will be described with reference to Fig. 2 through Fig. 4. A printer-plotter of which entire appearance is shown in Fig. 2 comprises a main unit 1 for conducting a predetermined action such as printing to a sheet-like medium M such as a roll of paper and a supporting unit 2 having a pair of right and left legs 2a by which the main unit 1 is supported. The main unit 1 comprises a body 10 fixed to the upper ends of the legs 2a, a feeding mechanism 20 for feeding the sheet-like medium M in the anteroposterior direction, a platen 30 for supporting the sheet-like medium M, a guide rail 40 extending in the lateral direction above the platen 30, a cutting head 50 and a printer head 60 which are supported by the guide rail 40 and are movable along the guide rail 40 in the lateral direction.

The body 10 has left and right side walls 11a, 11b. As seen from Fig. 3 showing its internal structure, the left and right ends of the guide rail 40 are connected to and supported by the side walls 11a and 11b, respectively so that the guide rail 40 extends in the lateral direction between the side walls 11a and 11b. The feeding mechanism 20 comprises pairs of feeding rollers 21 and press rollers 22 which are disposed on a front side of the apparatus so that the pairs are aligned in the lateral direction. Each pair comprises the feeding roller 21 and the press roller 22 as a lower roller and an upper roller which are rotatable in both the normal and reverse directions about respective rotary shafts extending in the lateral direction. In the state where the sheet-like medium M is inserted between the feeding rollers 21 and the press rollers 22, the feeding rollers 21 are rotated by an electric motor and the press rollers 22 are also rotated according to the rotation of the feeding rollers 21, whereby the sheet-like medium M is fed in the anteroposterior direction. The platen 30 is disposed between the left and right side walls 11a and 11b and is provided on its upper surface with a supporting surface 30a for horizontally supporting the sheet-like medium M. The supporting surface 30a is provided with a number of holes formed therein in which negative pressure can act. Therefore, the sheet-like medium M is sucked to the supporting surface 30a by the negative pressure so that the sheet-like medium M can be securely held on the supporting surface 30a.

The cutting head 50 comprises a carriage 51 which is attached to and movable along the guide rail 40 in the lateral direction, a cutter holder 52 which is attached to the carriage 51, and a cutting head connecting mechanism 110 disposed within the carriage 51. The cutter holder 52 is supported such that the cutter holder 52 is movable in the vertical direction relative to the carriage 51 by a vertical movement mechanism (not shown). By controlling the operation of the vertical movement mechanism, the position in the vertical direction of the cutter 53 can be adjusted. A cutter 53 can be detachably attached to a lower end of the cutter holder 52 and has a blade at its lower end for cutting the sheet-like medium M. The cutter 53 is supported by the cutter holder 52 such that the cutter 53 is rotatable in the normal and reverse directions about a rotary shaft which extends in the vertical direction. Connected to the cutting head 50 are electric wires or harnesses which extend from the main unit to transmit power and signals for controlling the operation of the aforementioned vertical movement mechanism, but not shown.

The printer head 60 comprises a carriage 61 which is attached to and movable along the guide rail 40 in the lateral direction, and a plurality of printer head modules 62 which are disposed on the lower end side of the carriage 61 and are aligned in the lateral direction. Each printer head module 62 is provided with a number of ink ejection holes formed in its lower surface so that the printer head modules 62 can eject ink droplets of different colors, respectively. The ink ejection holes of each module 62 face to the supporting surface 30a of the platen 30 in the vertical direction. As the sheet-like medium M is put on the platen 30, ink droplets are ejected from the ink ejection holes to the surface of the sheet-like medium M to conduct intended printing. Connected to the printer head modules 62 are tubes for supplying inks to ink passages from the ink storage portions (not shown) of the cartridge type. Also connected to the modules 62 are electric wires or harnesses for supplying electric power and signals for controlling the ink ejection. The ink storage portions may be mounted on the body 10 or on the carriage 61.

Below a right end portion of the guide rail 40, the main unit (the body 10) is provided with a maintenance device 70. The maintenance device 70 comprises a stage 70a which is movable in the vertical direction and an anti-drying member 71 mounted on the upper surface of the stage 70a. The anti-drying member 71 is made of fabric or sponge having moisturizing property. As the printer head 60 is moved to the right end portion of the guide rail 40, the stage is automatically moved upward so that the lower surface of the head module 62 is covered by the anti-drying member 71 to close the ink ejection holes. As the ink ejection holes are closed, the inks around the ink ejection holes are blocked from being exposed to ambient air, thereby preventing the clogging of the ink ejection holes 62a due to drying of inks and thus keeping the ink ejection performance.

The aforementioned heads 50, 60 are moved along the guide rail 40 in the lateral direction to conduct intended cutting process and intended printing process. A head driving device 80 for moving the heads 50, 60 in the lateral direction is arranged in the body 10. The head driving device 80 comprises driving and driven pulleys 81, 82 which are positioned above the right and left end portions of the guide rail 40, a driving mechanism composed of an electric motor 83 (for example, a stepping motor or a servomotor) for rotating the driving pulley 81, a driving belt 84 (driving force transmitting member) composed of an endless belt which is wound around the pulleys 81 and 82 to extend therebetween. The driving belt 84 is a synchronous belt and the pulleys 81, 82 are both synchronous pulleys so as to prevent slippage of the belt. In the driving device 80, the driving belt 85 can be controlled to move in the lateral direction as shown by arrows in Fig. 3 by controlling the drive of the electric motor 83 to rotate the driving pulley 81. It should be noted that he driving belt 85 is a synchronous belt and the pulleys 81, 82 are both synchronous pulleys so as to prevent slippage of the belt.

The heads 50, 60 are supported by the guide rail 40 such that the heads 50, 60 are movable in the lateral direction independently from each other. To enable the respective heads 50, 60 to be controlled to independently travel in the lateral direction, the cutting head connecting mechanism 110 for detachably connecting the cutting head 50 and the driving belt 85 is disposed on the cutting head 50 and a printer head connecting mechanism 120 for detachably connecting the printer head 60 and the driving belt 85 is disposed on the printer head 60, as described above.

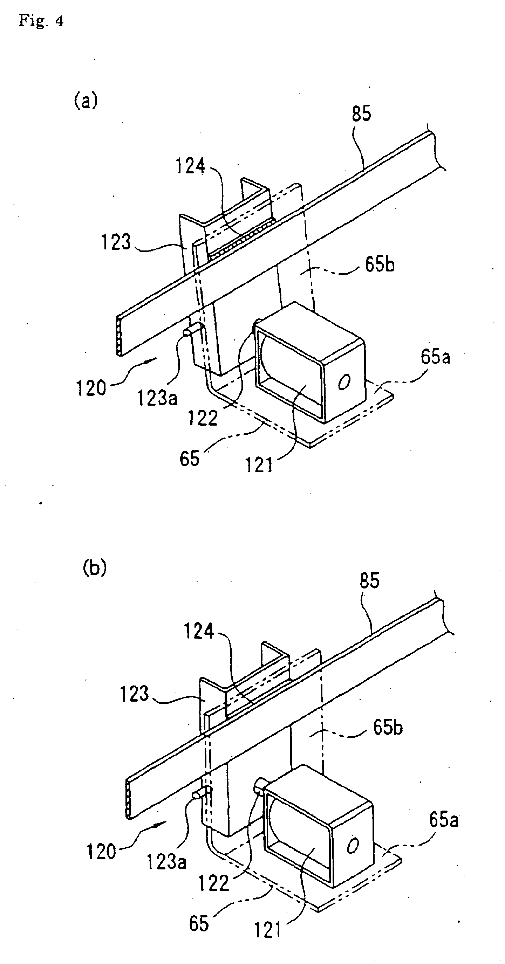

The connecting mechanisms 110, 120 have the same structure. The specific structure is shown in Figs. 4(a), 4(b) taking the printer head connecting mechanism 120 as an example. The printer head connecting mechanism 120 comprises a solenoid driving device 121 mounted on a horizontal portion 65a extending horizontally of an L-like plate member 65 composing the carriage 61 of the printer head 60, a plunger 122 which projects forward from the front end of the solenoid driving device 121 and is moved in the anteroposterior direction (protracted or retracted in the axial direction) by the solenoid driving device 121, and a clamping plate 123 connected to the distal end of the plunger 122. The clamping plate 123 is located in front of a vertical portion 65b which extends vertically such that the driving belt 85 is positioned between the clamping plate 123 and the vertical portion 65b. The clamping plate 123 is provided with pivot pins which are formed to project rightward and leftward from right and left side ends of a middle portion in the vertical direction of the clamping plate 123, whereby the clamping plate 123 is pivotally supported in the anteroposterior direction relative to the carriage 61. The plunger 122 is connected to the lower portion of the clamping plate 123. The upper portion of the clamping plate 123 is arranged to face to the driving belt 85.

As the plunger 122 is pushed out by the solenoid driving device 121 as shown in Fig. 4(b), the lower portion of the clamping plate 123 is pivotally moved forward about the pivot pins 123a and the upper portion of the clamping plate 123 is retracted backward so that the driving belt 85 is clamped between the clamping plate and the vertical portion 65b. As a result, the printer head 60 (and the carriage 61 to which the printer head 60 is attached) is connected to the driving belt 85. To reinforce this connection, an antislip member 124 is attached to a portion of the upper portion of the clamping plate 123. In case where the driving belt 85 is a synchronous belt having teeth, the antislip member 124 may be composed of a member having teeth which can mesh with the teeth of the driving belt 85. Alternatively, the antislip member 124 may be composed of a member having high coefficient of friction. On the other hand, as the plunger 122 is retracted by the solenoid driving device 121 as shown in Fig. 4(a), the lower portion of the clamping plate 123 is pushed back and the upper portion is spaced apart from the driving belt 85, thereby releasing the clamping of the driving belt 85. As a result, the printer head connecting mechanism 120 is separated from the driving belt 85 and the printer head 60 is thus separated from the driving belt 85.

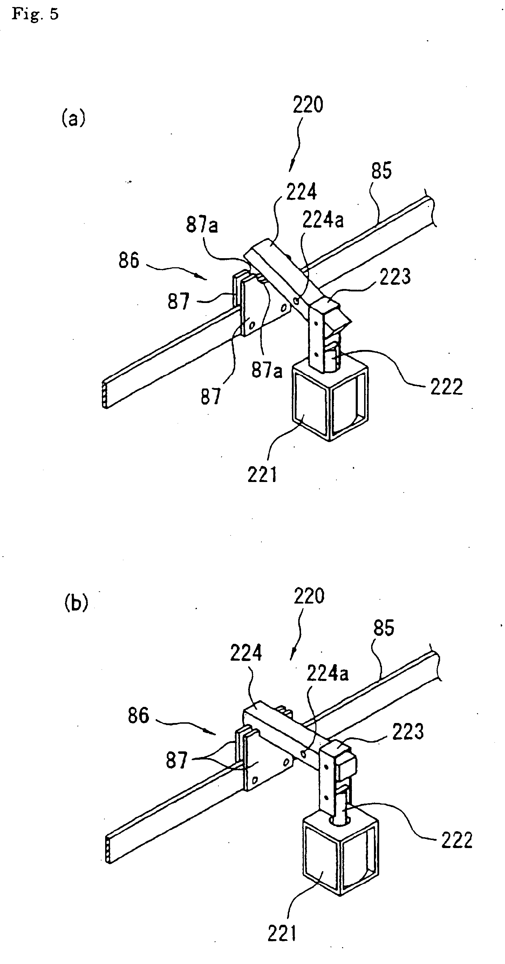

Hereinafter, a printer head connecting mechanism 220 will be described with reference to Figs. 5(a), 5(b). In case of this printer head connecting mechanism 220, the driving belt 85 is provided with a hook receiver 86 attached thereto. The hook receiver 86 is composed of two plate members 87, 87 which are connected to each other in a state sandwiching the driving belt 85 from the front and back and which are provided with engaging cutouts 87a formed in upper edges thereof, respectively. The printer head connecting mechanism comprises a solenoid driving device 221 attached to the carriage 61 of the printer head 60, a vertical movable member 223 which projects upward from the upper end of the solenoid driving device 221 and is connected to a plunger 222 which is moved vertically by the solenoid driving device 221 so that the vertical movable member 223 is thus moved vertically, and a pivot hook member 224 connected to the vertical movable member 223.

The pivot hook member 224 is provided with a pivot hole 224a formed in its middle portion and is connected to the carriage 61 via a pin through the pivot hole 224a. Thus, the pivot hook member 224 is pivotally movable in the vertical direction about the pivot hole 224a and the distal end of the pivot hook member 224 can be engaged with the engaging cutouts 87a of the hook receiver. The rear end of the pivot hook member 224 is pivotally connected to an upper end portion of the vertical movable member 223. Therefore, as the plunger 222 is moved vertically by the solenoid driving device 221, the vertical movable member 223 is moved vertically together with the plunger 222 so that the pivot hook member 224 is pivotally moved vertically.

As the plunger 222 is pushed up by the solenoid driving device 221 as shown in Fig. 5(b), the vertical movable member 223 is moved upward so that the rear end of the pivot hook member 224 is pushed up. Accordingly, the pivot hook member 224 is pivotally moved about the pivot hole 224a and the front end thereof enters into and is engaged with the engaging cutouts 87a. That is, by moving the plunger 222 upward by the solenoid driving device 221, the pivot hook member 224 is engaged with the hook receiver 86, whereby the printer head 60 is connected to the driving belt 85. On the other hand, as the plunger 222 is pushed down by the solenoid driving device 221 as shown in Fig. 5(a), the vertical movable member 223 is moved downward so that the rear end of the pivot hook member 224 is pushed down. Accordingly, the pivot hook member 224 is pivotally moved about the pivot hole 224a and the front end thereof is separated from the engaging cutouts 87a. That is, by moving the plunger 222 downward by the solenoid driving device 221, the pivot hook member 224 is separated from the hook receiver 86, thereby releasing the connection between the printer head 60 and the driving belt 85.

Since the structure of the cutting head connecting mechanism 110 mounted on the cutting head 50 is the same as the structure of the printer head connecting mechanism 120, 220, the description about this will be omitted.

In the printer-plotter P having the structure as aforementioned above, a left hook bracket 12a is fixed to the left side wall 11a of the body 10 as shown in Fig. 3. The left hook bracket 12a is provided with a left-side hook 131 which is pivotally movable in the vertical direction by a built-in solenoid (not shown). On the other hand, the cutting head 50 is provided with an engaging portion which can be engaged with the left-side hook 131 when the cutting head 50 travels along the guide rail 40 and reaches the left end portion, but not shown. The left-side hook 131 is actuated by the built-in solenoid to engage with or disengage from the engaging portion when the cutting head 50 is positioned at the left end portion.

Similarly, a right hook bracket 12b is fixed to the right side wall 11b of the body 10 as shown in Fig. 3. The right hook bracket 12b is provided with a right-side hook 141 which can pivotally move in the vertical direction by a built-in solenoid (not shown). On the other hand, the printer head 60 is provided with an engaging portion which can be engaged with the right-side hook 141 when the printer head 60 travels along the guide rail 40 and reaches the right end portion, but not shown. The right-side hook 141 is actuated by the built-in solenoid to engage with or disengage from the engaging portion when the printer head 60 is positioned at the right end portion.

Hereinafter, the operation of conducting the cutting and printing processes relative to a sheet-like medium M using the printer-plotter P having the aforementioned structure.

For conducting the cutting process relative to the sheet-like medium M using the cutting head 50, prior to the process, the printer head 60 is connected to the driving belt 85 by the printer head connecting mechanism 120. In this state, the driving belt 85 is moved rightward by driving the electric motor 83 so as to move the printer head 50 rightward. At this point, the cutting head connecting mechanism 110 maintains the cutting head 50 apart from the driving belt 85. As the printer head 60 reaches the right end portion, the hook 141 is engaged with the hook receiving portion so that the printer head 60 is fixed and held at the right end. At the same time, the stage of the maintenance device 70 is automatically moved upward so that the ink ejection holes formed in the lower surface of the printer head module 62 are closed by the anti-drying member 71.

Then, the printer head 60 is separated from the driving belt 85 by the printer head connecting mechanism 120 and the cutting head 50 is connected to the driving belt 85 by the cutting head connecting mechanism 110. Then, the driving belt 85 is moved by the electric motor 83 to move the cutting head 50 connected to the driving belt 85 in the lateral direction along the guide rail 40. At the same time, the sheet-like medium M is moved in the anteroposterior direction by the feeding mechanism 20, whereby the cutter 53 is moved in the anteroposterior and lateral directions relative to the medium M to conduct the intended cutting process.

On the other hand, for conducting the printing process relative to the sheet-like medium M using the printer head 60, also prior to the process, the cutting head 50 is connected to the driving belt 85 by the cutting head connecting mechanism 110. In this state, the driving belt 85 is moved leftward by driving the electric motor 83 so as to move the cutting head 50 leftward. At this point, the printer head connecting mechanism 120 maintains the printer head 60 apart from the driving belt 85. As the cutting head 50 reaches the left end portion, the hook 131 is engaged with the hook receiving portion so that the cutting head 50 is fixed and held at the left end.

Then, the printer head 60 fixed and held at the right end is released from the engagement with the hook 141 and the cutting head 50 is separated from the driving belt 85 by the cutting head connecting mechanism 110. The printer head 60 is connected to the driving belt 85 by the printer head connecting mechanism 120, then, the driving belt 85 is moved by driving the electric motor 83 so as to move the printer head 60 connected to the driving belt 85 in the lateral direction along the guide rail 40 and ink droplets are ejected through the ink ejection holes formed in the lower surface of the printer head modules 62 onto the surface of the sheet-like medium M put on the platen 30, thereby conducting intended printing.

After completion of the predetermined cutting and the printing processes as mentioned above, the sheet-like medium M is cut out by a separation cutter (not shown) which is attached to the carriage 61 of the printer head 60 such that the separation cutter is movable in the vertical direction, thereby separating the sheet-like medium M into a printed portion and an unprinted portion. This action is achieved by moving the separation cutter downward to a position capable of touching the sheet-like medium M and sweeping the printer head 60 in a lateral direction.

According to the printer-plotter P as mentioned above, the head not required for the action relative to the sheet-like medium M is never moved along the guide rail 40. Therefore, the capacity of the electric motor 83 for driving the heads 50, 60 can be smaller, thereby achieving the cost reduction. Since the cutting head 50 is on standby in a state fixed at the left end portion 40a of the guide rail 40 during the printing process using the printer head 60, there is no chance that the cutting head 50 gets closer to the printer head 60 so that ink droplets ejected from the printer head 60 adhere never to the cutting head 50 and the cutting head 50 is thus never contaminated with the ink. Moreover, there is no chance that parts mounted on the cutting head 50 such as the covers of harnesses or the like are dissolved due to the adhesion of the ink. Therefore, the requirement for selecting a material having ink resistance to produce these parts can be eliminated, thereby achieving both elimination of operation error and reduction of cost.

Though the printer-plotter according to the present invention has been described with the aforementioned embodiments, the scope of the present invention is not limited to the aforementioned structures. As will be described below, the combination of two head supported by the guide rail 40, the structure of the head driving device 80, the structure of the cutting head and printer head connecting mechanisms 110, 120, the structure for moving the heads 50, 60 in the anteroposterior direction and the lateral direction relative to the sheet-like medium M may be suitably modified. In the following description, the same components as those of the aforementioned structural examples will be marked by the same numerals so as to omit redundant description.
The combination of heads may be a combination of two printer heads for ejecting ink droplets of different compositions or different colors, for example, an aqueous printer head for ejecting aqueous ink droplets and a solvent printer head for ejecting solvent ink droplets.

In this variation example, while one of the heads is used to conduct printing, the other head is positioned at an end of the guide rail 40 and is on standby in a state where the ink ejection holes are closed. Therefore, the capacity of the electric motor 83 can be smaller and there is no chance that ink droplets ejected from one of the printer heads adhere to the other printer head. It should be noted that each conventional apparatus is provided with only one printer head even when printing with inks of different properties such as aqueous ink and solvent ink is needed because it is impossible to share tubes and a maintenance device. In this structural example, since two printer heads can be mounted, reduction in installation space and cost can be achieved as compared to the case where separate printer-plotters should be installed according to the ink compositions.

In this variation example, the combination of inks to be ejected from two printer heads is not limited to the combination of aqueous ink and solvent ink. One of the heads may eject UV curable ink. In this case, a light source device such as a halogen lamp for irradiating ultraviolet light to the sheet-like medium M is attached to one of the right and left side walls of the carriage of the printer head via a bracket.

Instead of the cutting head 50, a preprocessing head or a post-processing head may be provided. The preprocessing head is a head for conducting pretreatment for obtaining excellent printing result by ejecting a predetermined processing liquid relative to a sheet-like medium M such as fabric prior to the printing to ensure the permeability and fix level similar to the level of a sheet-like medium M which is manufactured for printing purpose. The post-processing head is a head for conducting coating process on a printed surface by ejecting a predetermined processing liquid relative to a sheet-like medium M after printing to improve the rub resistance and weatherability. The carriage of each head is provided with a spraying device having nozzles for ejecting the processing liquid such that the nozzles are arranged to face to the supporting surface 30a in the vertical direction. To use the head for the processing, the head is connected to the driving belt 85, the printer head 60 is connected to the body 10, and the ink ejection holes 62a are closed. By ejecting the processing liquid from the nozzles while moving the nozzles in the anteroposterior and lateral directions relative to the sheet-like medium M, whereby the processing liquid is sprayed on a predetermined area of the sheet-like medium M.

In this variation example, since treatment before or after the printing can be conducted in addition to the function as an inkjet printer, reduction in installation space and cost can be achieved as compared to a case where a separate apparatus capable of conducting such treatment is installed. Moreover, the treatment and the printing can be successively conducted automatically singly by this apparatus, thereby leading to significant laborsaving.

Instead of the cutting head 50, a scanner head for reading images and characters recorded or printed on a sheet-like medium M may be provided. The carriage of the scanner head is provided with a scanner on which an image sensor having optical conversion elements is mounted for reading images and characters. To use the scanner head for the image reading, the carriage of the scanner head is connected to the driving belt 85, the printer head is connected to the body 10, and the ink ejection holes are closed. By repeating an action of feeding the sheet-like medium forward a predetermined length by the feeding mechanism 20 and an action of reading an image or the like per a predetermined pixel width by the image sensor while moving the carriage of the scanner head once in the lateral direction, the image or the like in the predetermined area of the sheet-like medium can be read out.

The data of the image thus read out can be used to conduct printing using the printer head. Alternatively, the scanner head may be used to read out image relative to a portion printed by the printer head. Then, the data for printing and the data of the image read out are compared to check the printing accuracy. Further, the result of checking of the printing accuracy may be displayed on an operation panel to prompt a user to carry out suitable maintenance operation.

In the variation example, the action of reading image or the like and the action of printing can be successively conducted automatically singly by this apparatus, thereby leading to significant laborsaving as compared to a case that a scanner and a printer are separately placed or a case that a scanner is structured as a cartridge type which can be replaced with a head module.

Further, a writing thing such as a pen may be held by the cutter holder 52 of the cutting head 50 in any of the aforementioned structural example. In this case, the printer has a function as a pen plotter. The cutter and the writing thing may be detachably attached to the cutter holder 52. Alternatively, one of the heads is a printer head and the other head is structured such that two or more of the followings, that is, a cutter holder 52, a spraying device for ejecting processing liquid, and a scanner may be detachably attached to the carriage. Therefore, it is possible to provide a printer-plotter having multiple functions. In any of the structural examples, the locations of the heads in the lateral direction may be exchange. Also in this case, the same effects can be obtained. If the printer head is located at a left side, the maintenance device 70 is positioned below a left end portion of the guide rail 40.

The head driving device 80 may be of any structure capable of transmitting driving force to the carriage supported by the guide rail 40 for moving along the guide rail in the lateral direction. For example, the head driving device 80 comprises a pair of right and left pulleys each having a groove which is formed in the outer periphery to extend in the circumferential direction and a steel wire which is wound around the pulleys to extend therebetween with some tension not to slip.

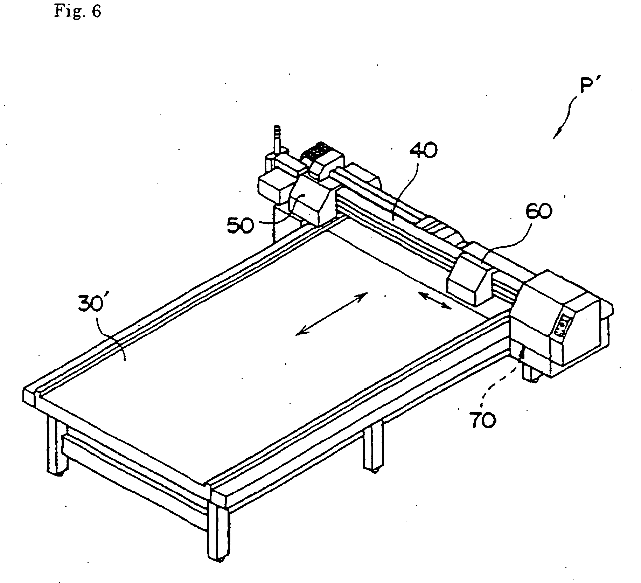

The arrangement for moving the head in the anteroposterior and lateral directions relative to the sheet-like medium may be an arrangement, as shown in Fig. 6, comprising a supporting table 30' which is fixed to a floor and supports a sheet-like medium placed thereon and a guide rail 40 which is disposed above the supporting table 30' to extend in the width direction, wherein the guide rail 40 is movable in the longitudinal direction of the supporting table 30' and the heads 50, 60 are movable in the anteroposterior and lateral directions relative to the sheet-like medium put on the supporting table 30'. This arrangement enables to handle a medium having large thickness. Alternatively, the guide rail may be fixed to the longitudinal direction of the supporting table and the supporting table may be movable in the longitudinal direction. This arrangement enables to handle a fabric as a sheet-like medium.

## Claims

1. A printer-plotter comprising:
a feeding mechanism (20) for feeding a sheet-like medium (M), put on a platen (30) thereof, in the anteroposterior direction;
a guide rail (40) which is disposed above said platen to extend in the lateral direction;
a first head (50) and a second head (60) which are supported by said guide rail and are movable independently from each other in the lateral direction along said guide rail, wherein said first head and second head conduct respective predetermined actions relative to the medium fed in the anteroposterior direction on said platen while moving in the lateral direction;
a driving device having a belt-like driving force transmitting member (85) which extends in parallel with said guide rail in the lateral direction and a driving mechanism for moving said driving force transmitting member in the lateral direction;
a first connecting mechanism (110) disposed on said first head for detachably connecting said first head to said driving force transmitting member;
and a second connecting mechanism (120) disposed on said second head for detachably connecting said second head to said driving force transmitting member; wherein
to conduct the predetermined action relative to the sheet-like medium by said first head, said first head is connected to said driving force transmitting member by said first connecting mechanism, said second head is separated from said driving force transmitting member by said second connecting mechanism, said driving force transmitting member is moved in the lateral direction by said driving mechanism to move said first head in the lateral direction; and wherein
to conduct the predetermined action relative to the sheet-like medium by said second head, said second head is connected to said driving force transmitting member by said second connecting mechanism, said first head is separated from said driving force transmitting member by said first connecting mechanism, said driving force transmitting member is moved in the lateral direction by said driving mechanism to move said second head in the lateral direction,
said printer-plotter being **characterized in that** said first connecting mechanism (110) is adapted to clamp said driving force transmitting member (85) for detachably connecting said first head (50) to said driving force transmitting member (85) and said second connecting mechanism (120) is adapted to clamp said driving force transmitting member (85) for detachably connecting said second head (60) to said driving force transmitting member (85),
wherein each of the first connecting mechanism (110) and the second connecting mechanism (120) is adapted to select its state between a state where the connecting mechanism clamps the driving force transmitting member (85) to connect to the driving force transmitting member and a state where the connecting mechanism releases the driving force transmitting member to separate from the driving force transmitting member (85).

2. A printer-plotter as claimed in claim 1, further comprising:
a first head fixing mechanism (12a, 131) for fixing and holding said first head (50) at one of the ends of said guide rail (40) and a second head fixing mechanism (12b, 141) for fixing and holding said second head (60) at the other end of said guide rail (40); wherein
when said first head connected to said driving force transmitting member is moved in the lateral direction by moving said driving force transmitting member in the lateral direction by said driving mechanism, said second head separated from said driving force transmitting member is fixed and held by said second head fixing mechanism, and wherein
when said second head connected to said driving force transmitting member is moved in the lateral direction by moving said driving force transmitting member in the lateral direction by said driving mechanism, said first head separated from said driving force transmitting member is fixed and held by said first head fixing mechanism.

3. A printer-plotter as claimed in claim 1 or 2, wherein, in said driving device, said driving mechanism comprises a pair of pulleys (81, 82) which are disposed near the right and left ends of said guide rail, respectively, and a driving motor (83) for driving either one of said pulleys to rotate, and said driving force transmitting member (85) is a driving belt which is wound around said pulleys to extend along and in parallel with said guide rail, wherein said driving belt is moved in the lateral direction by the rotation of said pulley driven by said driving motor.

4. A printer-plotter as claimed in any one of claims 1 through 3, wherein said first head (50) is a cutting head for conducting cutting process relative to said medium, and said second head (60) is a printer head for conducting printing relative to said medium.

5. A printer-plotter as claimed in any one of claims 1 through 3, wherein said first head and said second head are printer heads for conducting printing relative to said medium, respectively.

6. A printer-plotter as claimed in claim 4, wherein said cutting head is provided with a spray unit (90) for forming a coating layer on the surface of said sheet-like medium.

## Patentansprüche

1. Drucker-Plotter, umfassend:
einen Zuführmechanismus (20) zum Zuführen eines auf eine Druckwalze bzw. Druckplatte (30) hiervon gelegten blattartigen Mediums (M) in Vorne-Hinten-Richtung;
eine Führungsschiene (40), die über der Druckwalze bzw. Druckplatte derart angeordnet ist, dass sie sich in seitlicher Richtung erstreckt;
einen ersten Kopf (50) und einen zweiten Kopf (60), die von der Führungsschiene gestützt werden und unabhängig voneinander in seitlicher Richtung entlang der Führungsschiene beweglich sind, wobei der erste Kopf und der zweite Kopf jeweilige vorbestimmte Aktionen relativ zu dem in Vorne-Hinten-Richtung auf der Druckwalze bzw. Druckplatte zugeführten Medium ausführen, während sie sich in seitlicher Richtung bewegen;
eine Antriebsvorrichtung mit einem riemenartigen Antriebskraftübertragungselement (85), das sich parallel zu der Führungsschiene in seitlicher Richtung erstreckt, und einen Antriebsmechanismus zum Bewegen des Antriebskraftübertragungselementes in seitlicher Richtung;
einen ersten Verbindungsmechanismus (110), der an dem ersten Kopf zum lösbaren Verbinden des ersten Kopfes mit dem Antriebskraftübertragungselement angeordnet ist; und
einen zweiten Verbindungsmechanismus (120), der an dem zweiten Kopf zum lösbaren Verbinden des zweiten Kopfes mit dem Antriebskraftübertragungselement angeordnet ist; wobei
dafür, die vorbestimmte Aktion relativ zu dem blattartigen Medium durch den ersten Kopf auszuführen, der erste Kopf mit dem Antriebskraftübertragungselement durch den ersten Verbindungsmechanismus verbunden wird, der zweite Kopf von dem Antriebskraftübertragungselement durch den zweiten Verbindungsmechanismus getrennt wird, das Antriebskraftübertragungselement in seitlicher Richtung durch den Antriebsmechanismus bewegt wird, um den ersten Kopf in seitlicher Richtung zu bewegen; und wobei
dafür, die vorbestimmte Aktion relativ zu dem blattartigen Medium durch den zweiten Kopf auszuführen, der zweite Kopf mit dem Antriebskraftübertragungselement durch den zweiten Verbindungsmechanismus verbunden wird, der erste Kopf von dem Antriebskraftübertragungselement durch den ersten Verbindungsmechanismus getrennt wird, das Antriebskraftübertragungselement in seitlicher Richtung durch den Antriebsmechanismus bewegt wird, um den zweiten Kopf in seitlicher Richtung zu bewegen;
wobei der Drucker-Plotter **dadurch gekennzeichnet ist, dass** der erste Verbindungsmechanismus (110) dafür ausgelegt ist, das Antriebskraftübertragungselement (85) zum lösbaren Verbinden des ersten Kopfes (50) mit dem Antriebskraftübertragungselement (85) zu klemmen, und der zweite Verbindungsmechanismus (120) dafür ausgelegt ist, das Antriebskraftübertragungselement (85) zum lösbaren Verbinden des zweiten Kopfes (60) mit dem Antriebskraftübertragungselement (85) zu klemmen,
wobei jeder von dem ersten Verbindungsmechanismus (110) und dem zweiten Verbindungsmechanismus (120) dafür ausgelegt ist, seinen Zustand zwischen einem Zustand, in dem der Verbindungsmechanismus das Antriebskraftübertragungselement (85) zum Verbinden mit dem Antriebskraftübertragungselement klemmt, und einem Zustand, in dem der Verbindungsmechanismus das Antriebskraftübertragungselement zum Trennen von dem Antriebskraftübertragungselement (85) freigibt, auszuwählen.

2. Drucker-Plotter nach Anspruch 1, des Weiteren umfassend:
einen ersten Kopffixiermechanismus (12a, 131) zum Fixieren und Halten des ersten Kopfes (50) an einem der Enden der Führungsschiene (40) und einen zweiten Kopffixiermechanismus (12b, 141) zum Fixieren und Halten des zweiten Kopfes (60) an dem anderen Ende der Führungsschiene (40); wobei dann, wenn der mit dem Antriebskraftübertragungselement verbundene erste Kopf in seitlicher Richtung durch Bewegen des Antriebskraftübertragungselementes in seitlicher Richtung durch den Antriebsmechanismus bewegt wird, der von dem Antriebskraftübertragungselement getrennte zweite Kopf durch den zweiten Kopffixiermechanismus fixiert und gehalten wird, und wobei
dann, wenn der mit dem Antriebskraftübertragungselement verbundene zweite Kopf in seitlicher Richtung durch Bewegen des Antriebskraftübertragungselementes in seitlicher Richtung durch den Antriebsmechanismus bewegt wird, der von dem Antriebskraftübertragungselement getrennte erste Kopf durch den ersten Kopffixiermechanismus fixiert und gehalten wird.

3. Drucker-Plotter nach Anspruch 1 oder 2, wobei in der Antriebsvorrichtung der Antriebsmechanismus umfasst: ein Paar von Riemenscheiben (81, 82), die nahe an den rechten beziehungsweise linken Enden der Führungsschienen angeordnet sind, und einen Antriebsmotor (83) zum drehenden Antreiben einer jeden der Riemenscheiben, und das Antriebskraftübertragungselement (85) ein Antriebsriemen ist, der um die Riemenscheiben mit Erstreckung entlang der und parallel zu der Führungsschiene gewunden ist, wobei der Antriebsriemen in seitlicher Richtung durch die Drehung der von dem Antriebsmotor angetriebenen Riemenscheibe bewegt wird.

4. Drucker-Plotter nach einem der Ansprüche 1 bis 3, wobei der erste Kopf (50) ein Schneidkopf zum Ausführen eines Schneidprozesses relativ zu dem Medium ist und der zweite Kopf (60) ein Druckerkopf zum Ausführen eines Druckens relativ zu dem Medium ist.

5. Drucker-Plotter nach einem der Ansprüche 1 bis 3, wobei der erste Kopf und der zweite Kopf jeweils Druckerköpfe zum Ausführen eines Druckens relativ zu dem Medium sind.

6. Drucker-Plotter nach Anspruch 4, wobei der Schneidkopf mit einer Sprüheinheit (90) zum Bilden einer Überzugsschicht an der Oberfläche des blattartigen Mediums versehen ist.

## Revendications

1. Imprimante-traceur comprenant :
un mécanisme d'alimentation (20) destiné à délivrer un support du type feuille (M), placé sur une plaque d'impression (30) de celle-ci, dans la direction longitudinale ;
un rail de guidage (40) qui est disposé au-dessus de ladite plaque d'impression afin de s'étendre dans la direction latérale ;
une première tête (50) et une seconde tête (60) qui sont supportées par ledit rail de guidage et peuvent être déplacées indépendamment l'une de l'autre dans la direction latérale le long dudit rail de guidage, dans laquelle lesdites première tête et seconde tête conduisent des actions prédéterminées respectives par rapport au support délivré dans la direction longitudinale sur ladite plaque d'impression tout en se déplaçant dans la direction latérale ;
un dispositif d'entraînement comportant un élément de transmission d'effort d'entraînement du type courroie (85) qui s'étend parallèlement audit rail de guidage dans la direction latérale et un mécanisme d'entraînement destiné à déplacer ledit élément de transmission d'effort d'entraînement dans la direction latérale ;
un premier mécanisme de couplage (110) disposé sur ladite première tête afin de coupler de manière amovible ladite première tête audit élément de transmission d'effort d'entraînement ;
et un second mécanisme de couplage (120) disposé sur ladite seconde tête afin de coupler de manière amovible ladite seconde tête audit élément de transmission d'effort d'entraînement ; dans laquelle
pour conduire l'action prédéterminée par rapport au support du type feuille avec ladite première tête, ladite première tête est couplée audit élément de transmission d'effort d'entraînement par ledit premier mécanisme de couplage, ladite seconde tête est séparée dudit élément de transmission d'effort d'entraînement par ledit second mécanisme de couplage, ledit élément de transmission d'effort d'entraînement est déplacé la direction latérale par ledit mécanisme d'entraînement afin de déplacer ladite première tête dans la direction latérale ; et dans laquelle
pour conduire l'action prédéterminée par rapport au support du type feuille avec ladite second tête, ladite second tête est couplée audit élément de transmission d'effort d'entraînement par ledit second mécanisme de couplage, ladite première tête est séparée dudit élément de transmission d'effort d'entraînement par ledit premier mécanisme de couplage, ledit élément de transmission d'effort d'entraînement est déplacé dans la direction latérale par ledit mécanisme d'entraînement afin de déplacer ladite seconde tête dans la direction latérale,
ladite imprimante-traceur étant **caractérisée en ce que** ledit premier mécanisme de couplage (110) est adapté pour pincer ledit élément de transmission d'effort d'entraînement (85) afin de coupler de manière amovible ladite première tête (50) sur ledit élément de transmission d'effort d'entraînement (85) et ledit second mécanisme de couplage (120) est adapté pour pincer ledit élément de transmission d'effort d'entraînement (85) afin de coupler de manière amovible ladite second tête (60) sur ledit élément de transmission d'effort d'entraînement (85),
dans laquelle chacun du premier mécanisme de couplage (110) et du second mécanisme de couplage (120) est adapté afin de sélectionner son état entre un état dans lequel le mécanisme de couplage pince l'élément de transmission d'effort d'entraînement (85) afin de se coupler à l'élément de transmission d'effort d'entraînement et un état dans lequel le mécanisme de couplage relâche l'élément de transmission d'effort d'entraînement afin de se séparer de l'élément de transmission d'effort d'entraînement (85).

2. Imprimante-traceur selon la revendication 1, comprenant, en outre :
un premier mécanisme de fixation de tête (12a, 131) destiné à fixer et à maintenir ladite première tête (50) au niveau d'une des extrémités dudit rail de guidage (40) et un second mécanisme de fixation de tête (12b, de 141) destiné à fixer et à maintenir ladite seconde tête (60) au niveau de l'autre extrémité dudit rail de guidage (40) ; dans laquelle
lorsque ladite première tête couplée audit élément de transmission d'effort d'entraînement est déplacée dans la direction latérale en déplaçant ledit élément de transmission d'effort d'entraînement dans la direction latérale par ledit mécanisme d'entraînement, ladite seconde tête séparée dudit élément de transmission d'effort d'entraînement est fixée et maintenue par ledit second mécanisme de fixation de tête, et dans laquelle
lorsque ladite seconde tête couplée audit élément de transmission d'effort d'entraînement est déplacée dans la direction latérale en déplaçant ledit élément de transmission d'effort d'entraînement dans la direction latérale par ledit mécanisme d'entraînement, ladite première tête séparée dudit élément de transmission d'effort d'entraînement est fixée et maintenue par ledit premier mécanisme de fixation de tête.

3. Imprimante-traceur selon la revendication 1 ou 2, dans laquelle, sur ledit dispositif d'entraînement, ledit mécanisme d'entraînement comprend une paire de poulies (81, 82) qui sont disposées respectivement à proximité des extrémités droite et gauche dudit rail de guidage, et un moteur d'entraînement (83) destiné à entraîner l'une ou l'autre desdites poulies en rotation, et ledit élément de transmission d'effort d'entraînement (85) est une courroie d'entraînement qui est enroulée autour desdites poulies afin de s'étendre le long dudit rail de guidage et parallèlement à celui-ci, dans laquelle ladite courroie d'entraînement est déplacée dans la direction latérale par la rotation de ladite poulie entraînée par ledit moteur d'entraînement.

4. Imprimante-traceur selon l'une quelconque des revendications 1 à 3, dans laquelle ladite première tête (50) est une tête de coupe destinée à conduire une opération de coupe par rapport audit support et ladite seconde tête (60) est une tête d'imprimante destinée à conduire une impression par rapport audit support.

5. Imprimante-traceur selon l'une quelconque des revendications 1 à 3, dans laquelle ladite première tête et ladite seconde tête sont des têtes d'imprimante destinées respectivement à conduire une impression par rapport audit support.

6. Imprimante-traceur selon la revendication 4, dans laquelle ladite tête de coupe est équipée d'une unité de pulvérisation (90) destinée à former une couche de revêtement sur la surface dudit support du type feuille.
